# FASCICULE DE BREVET EUROPEEN

(11) **EP 3 020 996 B1**
(45) Date de publication et mention de la délivrance du brevet: **22.04.2020**
(21) Numéro de dépôt: 15188560.5
(22) Date de dépôt: 06.10.2015
(51) Int. Cl.: F16D 65/097

(54) **FREIN À DISQUE À ÉTRIER COULISSANT COMPORTANT UN RESSORT CENTRAL DE RAPPEL ÉLASTIQUE D'UN PATIN DE FREINAGE EXTÉRIEUR COMPORTANT DES MOYENS DE RATTRAPAGE DU JEU D'USURE, RESSORT ET KIT DE REMPLACEMENT**
SCHWIMMSATTELBREMSE, DIE EINE ZENTRALE ELASTISCHE RÜCKHOLFEDER EINES EXTERNEN BREMSBELAGS UMFASST, DIE AUSGLEICHSMITTEL DES VERSCHLEISSSPIELS UMFASST, FEDER UND ERSATZTEILKIT
SLIDING CALIPER DISK BRAKE INCLUDING A CENTRAL RETURN SPRING OF AN EXTERIOR BRAKE SHOE INCLUDING WEAR PLAY COMPENSATION MEANS, SPRING AND REPLACEMENT KIT

(30) Priorité: 10.10.2014 FR 1459733
(43) Date de publication de la demande: 18.05.2016
(73) Titulaire: Chassis Brakes International B.V., 5656 AG Eindhoven (NL)
(72) Inventeur: FOUCOIN, Alexandre, 77144 MONTEVRAIN (FR)
(74) Mandataire: Brevalex

(56) Documents cités:
- WO-A1-03/027526
- DE-A1-102008 058 265

## Description

### DOMAINE TECHNIQUE DE L'INVENTION

L'invention se rapporte à un frein à disque de véhicule automobile à étrier coulissant.

L'invention se rapporte notamment à un ressort de rappel élastique d'un patin de freinage extérieur comportant des moyens de rattrapage, par déformation plastique, du jeu d'usure d'une garniture de friction du patin de freinage.

### ARRIERE PLAN TECHNIQUE DE L'INVENTION

L'invention se rapporte plus particulièrement à un frein à disque de véhicule automobile du type décrit et représenté dans la demande de brevet français n° FR-A1-3004500 qui comporte :
- un disque de frein qui s'étend dans un plan transversal à un axe d'orientation axiale de rotation du disque ;
- un support fixe par rapport à un châssis du véhicule ;
- deux patins de freinage, intérieur et extérieur dont chacun comporte une garniture de friction dont une face transversale de friction coopère avec une piste de freinage associée du disque, chaque patin de freinage étant monté coulissant axialement dans le support entre une position active dans laquelle la face de friction est en appui contre la piste annulaire associée du disque, et une position inactive dans laquelle la face de friction est espacée axialement de la piste annulaire associée du disque, d'un jeu déterminé de fonctionnement ;
- des moyens de rappel de chaque patin de freinage vers sa position inactive, qui est par exemple un ressort de rappel élastique interposé entre le patin de freinage et le support fixe.

Dans un frein à disque, le coulissement des patins de freinage vers leur position active est commandé par un piston. Les deux patins de freinage, intérieur et extérieur, pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance suffisante du disque. Ceci peut par exemple se produire lorsque le coulissement des patins de freinage est de qualité insuffisante, voire grippé, ou bien si la conception même du patin crée de la « restitution ».

Bien que les patins de freinage ne soient plus serrés activement contre le disque, chacune des pistes annulaires de ce dernier frotte néanmoins en permanence contre la garniture de friction portée par le patin de freinage associé. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du véhicule.

Pour résoudre ces problèmes d'usure et d'échauffement, le document mentionné précédemment propose un frein à disque dans lequel, pour chacun des deux patins, il est prévu deux ressorts de rappel élastique appariés, dont chacun comporte des moyens de rattrapage d'un jeu d'usure de la garniture de friction du patin de freinage qui se déforment plastiquement lorsque la course du patin de freinage jusqu'à sa position active est supérieure audit jeu déterminé de fonctionnement.

A cet effet, un ressort de rappel élastique comporte au moins un tronçon d'orientation axiale qui est déformable élastiquement par traction entre un état de repos et un état d'élongation maximale dont la valeur est égale au jeu déterminé de fonctionnement, le ressort comportant au moins un tronçon déformable plastiquement, sous l'effet d'un effort de traction axiale, formant lesdits moyens de rattrapage du jeu d'usure, ce tronçon déformable plastiquement étant conformé pour être allongé plastiquement lorsque la course du patin de freinage jusqu'à sa position active est supérieure au jeu déterminé de fonctionnement.

Le document WO A1 03/027526 décrit et représente une conception d'un ressort de rappel élastique d'un patin de freinage.

L'invention vise à améliorer la conception et les performances de tels ressorts de rappel élastique.

Dans un tel frein dont chaque patin de freinage, intérieur et extérieur, est équipé d'une paire de ressorts de rappel élastique, on peut dans certains cas constater des problèmes d'équilibrage de l'étrier de frein coulissant par rapport au disque, un patin de freinage plaqué contre le disque pouvant provoquer du couple résiduel.

Par ailleurs, sous l'action des ressorts de rappel élastique qui l'équipent, on peut aussi dans certains constater que le patin de freinage intérieur - avec lequel coopère la face avant du piston de frein - provoque un enfoncement axial du piston dans son alésage. Il est donc nécessaire d'avoir des ressorts de rappel élastique de caractéristiques mécaniques (charge et raideur) différentes pour les patins de freinage extérieur et intérieur.

L'invention vise à remédier à ces inconvénients en proposant une nouvelle conception des moyens de rappel élastique, notamment du patin de freinage extérieur, d'un frein à disque à étrier coulissant.

### BREF RESUME DE L'INVENTION

Dans ce but, l'invention propose un frein à disque de véhicule automobile qui comporte :
- un disque de frein qui s'étend dans un plan transversal à un axe d'orientation axiale de rotation du disque ;
- un support fixe par rapport à un châssis du véhicule ;
- un étrier qui est monté coulissant axialement par rapport au support fixe et qui comporte :
   -- un boîtier arrière dans lequel un piston de frein est monté coulissant axialement pour coopérer, vers l'avant, avec un patin de freinage intérieur qui comporte une garniture de friction dont une face transversale avant de friction coopère avec une piste de freinage associée du disque ;
   -- une aile avant, solidaire axialement du boîtier pour coopérer avec un patin de freinage extérieur qui comporte une garniture de friction dont une face transversale arrière de friction coopère avec une piste de freinage associée du disque ;
- le patin de freinage extérieur étant monté coulissant axialement dans le support fixe entre une position arrière active dans laquelle la face de friction est en appui contre la piste annulaire associée du disque de frein, et une position avant inactive dans laquelle la face transversale arrière de friction est espacée axialement de la piste annulaire associée du disque de frein, d'un jeu déterminé de fonctionnement,

caractérisé en ce que le frein à disque comporte un ressort extérieur de rappel élastique du patin de freinage extérieur vers sa position inactive, en ce qu'une portion arrière de liaison du ressort extérieur de rappel élastique est fixée, directement ou indirectement, à une portion centrale associée du patin de freinage extérieur, et en ce qu'une portion avant du ressort extérieur de rappel élastique est solidaire axialement d'une portion centrale associée du support fixe.

Selon d'autres caractéristiques du frein à disque :
- le patin de freinage intérieur est solidaire en déplacement axial avec le piston de frein ;
- le ressort extérieur de rappel élastique du patin de freinage extérieur vers sa position inactive comporte des moyens, de rattrapage d'un jeu d'usure de la garniture de friction du patin de freinage extérieur, qui se déforment plastiquement lorsqu'une course du patin de freinage extérieur, selon une direction axiale de déplacement, jusqu'à une position active de freinage est supérieure audit jeu déterminé de fonctionnement ;
- la portion centrale associée du patin de freinage extérieur s'étend sensiblement au droit de l'axe de coulissement du piston de frein ;
- la portion centrale associée du support fixe est constituée par un tronçon central d'une poutre du support fixe qui s'étend dans un plan avant orthogonal à l'axe de coulissement du piston de frein, sensiblement au droit de cet axe de coulissement du piston de frein ;
- l'aile avant de l'étier comporte deux parties latérales espacées transversalement, qui s'étendent symétriquement par rapport à l'axe de coulissement du piston de frein, et qui délimitent entre elles un dégagement central dans lequel est agencé le ressort extérieur de rappel élastique ;
- les moyens qui se déforment plastiquement comportent un tronçon déformable plastiquement qui est formé par un pliage en accordéon qui s'étend entre la portion arrière de liaison et la portion avant de solidarisation du ressort extérieur de rappel élastique ;
- le ressort extérieur de rappel élastique comporte successivement au moins :
   - la portion avant de solidarisation du ressort extérieur de rappel élastique avec le support fixe ;
   - une deuxième branche rigide dont une extrémité proximale est reliée, à la portion de solidarisation, par un premier pli déformable plastiquement, autour d'un premier axe de déformation orthogonal à la direction axiale de déplacement du patin de freinage extérieur et parallèle au plan dans lequel s'étend la deuxième branche rigide ;
   - une troisième branche rigide dont une extrémité proximale est reliée à une extrémité distale de la deuxième branche rigide par un deuxième pli déformable plastiquement, autour d'un deuxième axe de déformation parallèle au premier axe de déformation ;
   - une quatrième branche rigide, dont une extrémité proximale est reliée à une extrémité distale de la troisième branche rigide par un troisième pli déformable plastiquement, autour d'un troisième axe de déformation parallèle au premier axe de déformation, et qui est fixée à la portion centrale associée du patin de freinage extérieur pour constituer la portion arrière de liaison du ressort extérieur de rappel élastique ;
- chaque branche rigide est une bande qui s'étend globalement dans un plan parallèle au premier axe de déformation;
- la quatrième branche rigide est espacée axialement par rapport à la portion de fixation.
- la portion avant de solidarisation du ressort extérieur de rappel élastique avec le support fixe comporte une première branche rigide qui est une bande qui s'étend dans un plan parallèle au premier axe de déformation, et l'extrémité proximale de la deuxième branche rigide est reliée à une extrémité distale de la première branche rigide par le premier pli déformable plastiquement ;
- la portion avant de solidarisation du ressort extérieur de rappel élastique avec le support fixe comporte une patte rigide qui prolonge une extrémité proximale de la première branche rigide pour constituer un coude formant crochet dont une portion concave reçoit le tronçon central de la poutre du support fixe ;
- chaque branche rigide est rectiligne ;
- chaque branche rigide comporte des moyens de rigidification ;
- chaque pli déformable élastiquement comporte une zone d'affaiblissement de ses propriétés mécaniques ;
- chaque pli déformable élastiquement est une portion coudée d'une bande comportant une fenêtre d'orientation parallèle au premier axe de déformation ;
- le ressort extérieur de rappel élastique est réalisé en une seule pièce par découpe et formage d'une feuille de matériau ;
- le ressort extérieur de rappel élastique est réalisé en une seule pièce par découpe, emboutissage et pliage d'une feuille de métal ;
- les branches rigides et les plis sont réalisés en une seule pièce par découpe emboutissage et pliage d'une bande de largeur constante ;
- dans un état avant toute déformation plastique des plis, la première branche rigide et la deuxième branche rigide forment un angle égal à l'angle que forment la deuxième branche rigide et la troisième branche rigide, et égal à l'angle que forment la troisième branche rigide et la troisième branche rigide ;
- le ressort extérieur de rappel élastique est réalisé dans un matériau choisi dans un groupe comportant notamment l'acier inoxydable, l'acier X2CrNbCu21, l'acier 304L, l'or, le plomb, un matériau synthétique, un matériau synthétique à matrice polymérique renforcé par des fibres naturelles ou synthétiques ;
- le ressort extérieur de rappel élastique est réalisé dans un matériau dont l'allongement à la rupture est compris entre 30 et 60%, dont la résistance à la traction est comprise entre 400M Pa et 1000 MPa, et dont la limite conventionnelle élastique est comprise entre 0 et 500 MPa ;
- le ressort extérieur de rappel élastique est réalisé dans un matériau dont l'allongement à la rupture est compris entre 40 et 60%, dont la résistance à la traction est comprise entre 400M Pa et 700 MPa, et dont la limite conventionnelle élastique est comprise entre 150 et 400 MPa ;
- le ressort extérieur de rappel élastique est réalisé dans un matériau dont l'allongement à la rupture est compris entre 50% et 60%, dont la résistance à la traction est comprise entre 400M Pa et 600 MPa, et dont la limite conventionnelle élastique est comprise entre 200 et 300 MPa ;
- le ressort extérieur de rappel élastique comporte une plaque fonctionnelle reliée à la portion avant de solidarisation et qui s'étend dans un plan avant orthogonal à l'axe de coulissement du piston de frein ;
- le ressort extérieur de rappel élastique est réalisé en une seule pièce avec la plaque fonctionnelle ;
- le patin de freinage extérieur comporte au moins une oreille latérale de guidage en coulissement qui est reçue dans une coulisse axiale du support fixe ;
- le frein à disque comporte une glissière qui épouse les parois de la coulisse et qui est fixée au support fixe ;

L'invention propose également un ressort de rappel élastique d'un patin de frein extérieur pour un frein à disque selon l'invention.

L'invention propose encore un kit de remplacement pour un frein à disque de véhicule automobile selon l'invention, caractérisé en ce qu'il comporte au moins un patin de freinage extérieur et un ressort extérieur de rappel élastique apparié audit patin de freinage extérieur. Le kit peut comporter de plus deux ressorts « radiaux » de montage du patin de frein extérieur.

### BREVE DESCRIPTION DES FIGURES

D'autres caractéristiques et avantages de l'invention apparaitront à la lecture de la description détaillée qui va suivre pour la compréhension de laquelle on se reportera aux dessins annexés dans lesquels :
- la figure 1 est une vue schématique en perspective éclatée qui représente un frein à disque réalisé selon un mode de réalisation de l'invention ;
- la figure 2 est une vue en perspective détaillée, selon un autre angle de vue, du frein à disque selon l'invention dont le patin de freinage extérieur est équipé d'un ressort extérieur de rappel élastique selon l'invention ;
- la figure 3 est une vue à plus grande échelle du ressort de rappel élastique de la figure 4 ;
- la figure 4 est une vue latérale à grande échelle du ressort extérieur de rappel élastique la figure 3 ;
- la figure 5 est une vue latérale de droite du ressort extérieur de rappel élastique de la figure 4 ;
- la figure 6 est une vue analogue à celle de la figure 3 qui illustre une variante de réalisation du ressort extérieur de rappel élastique ;
- la figure 7 est une vue en perspective de dessous qui illustre l'agencement du patin extérieur de freinage et du ressort extérieur de rappel élastique de la figure 7 ;
- la figure 8 est une vue latérale à grande échelle du ressort extérieur de rappel élastique des figures 6 et 7 ;
- la figure 9A est une vue schématique en perspective qui illustre en détail une oreille d'un patin de freinage équipée d'un ressort « radial » ;
- la figure 9B est une vue de détail en section de la figure 9A.

### DESCRIPTION DETAILLEEE DES FIGURES

Dans la suite de la description, des éléments présentant une structure identique ou des fonctions analogues seront désignés par des mêmes références.

On adoptera à titre non limitatif et sans référence à la gravité terrestre, des orientations axiales, verticales et transversales en référence au trièdre "A,V,T" des figures.

L'orientation axiale "A" est dirigée d'arrière en avant, parallèlement à un axe "B" de rotation du disque 12.

On définit le plan horizontal comme étant un plan axial transversal.

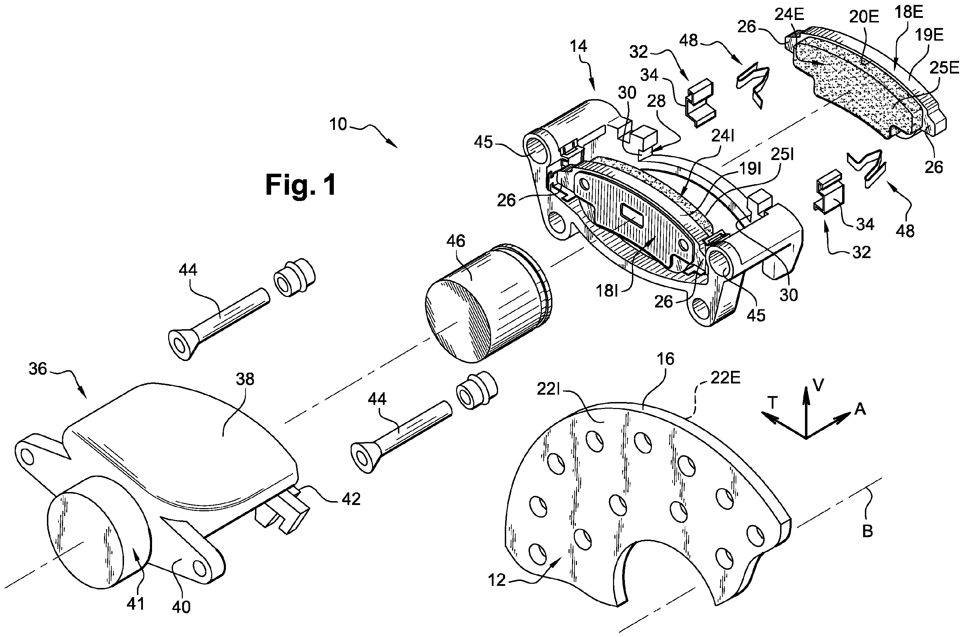

On a représenté schématiquement à la figure 1 un frein à disque 10 de véhicule automobile. Il s'agit ici d'un frein à disque 10 dit à "étrier flottant" ou "étrier coulissant"

De manière connue, le frein à disque comporte un disque 12 qui est monté tournant autour d'un axe "B" de rotation d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18I et 18E, arrière et avant (aussi appelés patin de freinage intérieur 18I et patin de freinage extérieur 18E) sont montés coulissant axialement dans le support 14 de part et d'autre du disque 12.

Les deux patins de freinage intérieur 18I et extérieur 18E présentent une structure et un agencement de guidage sur le support 14 qui sont identiques, par symétrie par rapport à un plan transversal vertical médian.

Par la suite, pour la conception du patin de freinage proprement dite, on ne décrira que le patin de freinage extérieur 18E arrière, la description étant applicable au patin de freinage intérieur 18I avant en inversant les directions avant et arrière et les indices "I" et "E".

Le patin de freinage extérieur 18E se présente sous la forme d'une plaque transversale verticale 19E support de garniture de friction. Le patin de freinage extérieur 18E présente une face arrière 20E, qui est orientée vers une face avant 22E en vis à vis du disque 12 qui est en forme d'une piste annulaire. La face avant 20E porte une garniture de friction 24E dont une face transversale et verticale arrière de friction 25E est apte à coopérer avec la face 22E du disque 12.

Chacune des extrémités transversales opposées du patin de freinage extérieur 18E comporte une oreille latérale 26 qui est montée coulissante, avec jeu, dans une coulisse 28 associée d'un bras associé de la chape 14.

Chaque coulisse 28 est d'orientation axiale et présente, en section par un plan vertical et transversal orthogonal aux axes A et B, une forme de "C" ouvert transversalement vers l'oreille latérale associée 26 du patin de freinage 18E. La coulisse 28 est délimitée transversalement par un fond 30 d'orientation axiale et globalement verticale.

Dans l'exemple représenté aux figures, une glissière 32 est interposée transversalement entre chaque oreille latérale 26 et la coulisse 28 associée.

Chaque glissière 32 est formée par un ressort à lame de section en "C" qui épouse les parois de la coulisse 28 associée. La glissière 32 comporte ainsi un fond 34 d'orientation verticale et axiale qui est agencé en regard du fond 30 de la coulisse 28.

La glissière 32 permet un degré déterminé de mouvement du patin de freinage extérieur 18E dans le support 14, c'est-à-dire, généralement mais de manière non limitative, un mouvement de coulissement axial, et un mouvement de coulissement transversal accompagnant la rotation du disque 12, lors d'une action de freinage.

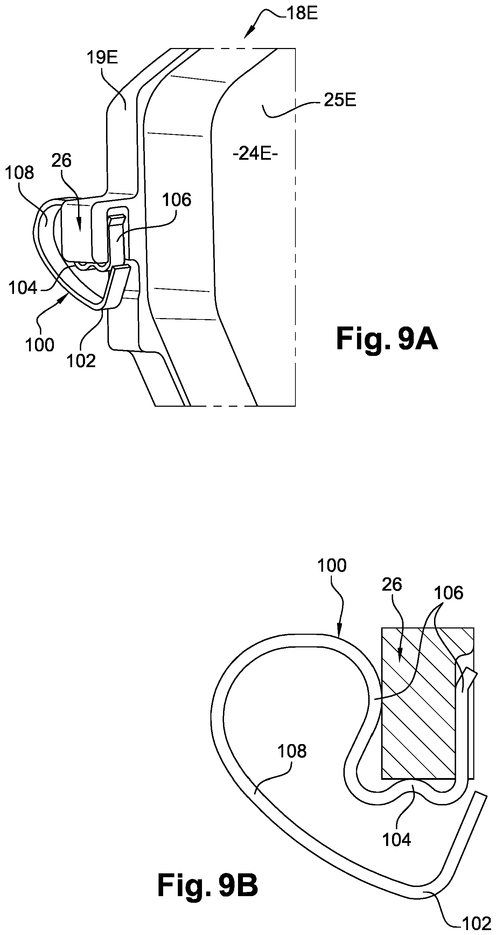

Sans sortir du cadre de la présente invention, et selon une conception non représentée, chaque oreille latérale 26 peut être équipée d'un ressort dit de montage, du type de celui décrit et représenté dans le document FR-A1-2.925.636 et illustré aux figures 9A et 9B.

Le patin de freinage extérieur 18E est ainsi monté coulissant selon une direction axiale, parallèle à l'axe de rotation B du disque 12, dans le support 14 sur une course de fonctionnement entre :
- une position arrière active dans laquelle la face transversale arrière de friction 25E de la garniture de friction 24E est en appui contre la face 22E en vis à vis du disque 12 ; et
- une position avant inactive dans laquelle la face transversale arrière de friction 25E de la garniture de friction 24E du patin de freinage extérieur 18E est écartée axialement par rapport à la face associée 22E du disque 12, d'un jeu déterminé de fonctionnement "J1".

Lors d'une opération de freinage, le serrage des patins de freinage 18I et 18E, depuis leur position inactive jusqu'à leur position active, est commandé par un étrier de frein coulissant 36 du frein à disque 10.

De manière connue, l'étrier 36 comporte une voûte 38 qui s'étend axialement au-dessus du support 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage extérieur 18E, et l'aile arrière 40 s'étend en regard du patin de freinage intérieur 18I.

L'étrier 36 est ici monté coulissant axialement par rapport au support fixe 14 par l'intermédiaire de deux colonnettes parallèles 44 de guidage dont chacune est reçue en coulissement dans un alésage axial associé 45 du support fixe 14.

De manière connue, l'aile arrière 40 de l'étrier 36 porte au moins un boîtier 41 qui délimite un alésage 45 dans lequel un piston 46 axial est monté coulissant et dont une face transversale avant d'appui est susceptible, lors d'une opération de freinage, de coopérer avec la face transversale en vis à vis du patin de freinage intérieur 18I pour le solliciter axialement vers l'avant, pour exercer un effort axial de serrage de la face transversale arrière de friction 25I de la garniture de friction 24I en appui contre la face 22I en vis à vis du disque 12.

Par réaction, l'étrier 36 coulisse axialement vers l'arrière et, de manière symétrique, l'aile avant 42 sollicite le patin de freinage extérieur 18E avant pour serrer la face transversale arrière de friction 25E de la garniture de friction 24E du patin de freinage extérieur 18E en appui contre la face 22E avant en vis à vis du disque 12.

Lorsque, à l'issue de l'opération de freinage, le piston 46 cesse de solliciter le patin de freinage intérieur 18I, le retour des patins de freinage 18I et 18E, depuis leur position active vers leur position inactive, est généralement provoqué par la rotation du disque 12, et son voile naturel, qui « repousse » chaque patin de freinage vers sa position inactive.

Néanmoins, dans certains cas, on a constaté que la force de répulsion exercée par le disque 12 n'est pas suffisante pour repousser chacun des patins de freinage 18I et 18E jusqu'à sa position inactive respective. La garniture de friction 24I, 24E des patins de freinage 18I, 18E continue ainsi à frotter contre le disque 12, alors qu'aucune action de serrage des garnitures de friction des patins de freinage par l'étrier 36 n'est commandée.

A l'issue d'une opération de freinage, pour garantir que le patin de freinage extérieur 18E revient dans une position inactive, le frein à disque 10 selon l'invention est équipé de moyens de rappel élastique du patin de freinage extérieur 18E vers sa position inactive.

Ces moyens de rappel élastique sont réalisés sous la forme d'un ressort central extérieur de rappel élastique 48E qui est agencé entre le patin de freinage extérieur 18E et le support fixe 14.

On décrira maintenant un premier mode de réalisation d'un ressort extérieur de rappel élastique 48E selon l'invention.

Le ressort extérieur de rappel élastique 48E se présente sous la forme d'une bande métallique, par exemple en acier, de section rectangulaire dont la largeur s'étend horizontalement et qui réalisée par exemple par découpe, emboutissage et pliage d'une tôle d'acier inoxydable d'épaisseur constante.

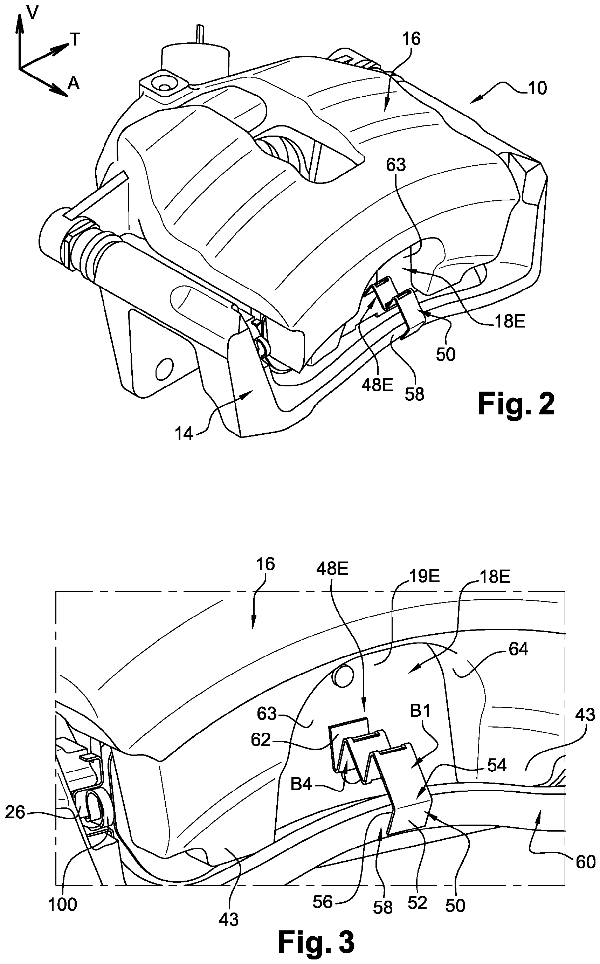

En se reportant notamment aux figures 3 à 5, le ressort extérieur de rappel élastique 48E comporte une première portion avant 50, en forme générale de « crochet » ouvert, formant les moyens de solidarisation du ressort extérieur 48E sur le support fixe 14.

La portion avant 50 de solidarisation du ressort de rappel élastique extérieur 48E occupe une position axiale fixe par rapport au support fixe 14 et au disque 12.

La portion avant 50 de solidarisation comporte une patte rigide 52 qui se prolonge par une branche rigide B1 pour constituer un coude 54 formant crochet dont une portion concave 56 d'angle obtus a0 reçoit un tronçon central 58 d'une poutre 60 du support fixe 14.

La poutre 60 s'étend globalement horizontalement selon la direction transversale T entre deux parties latérales 43 espacées transversalement de l'aile 42 de l'étrier coulissant 36, qui s'étendent symétriquement par rapport à l'axe de coulissement du piston de frein 46, et qui délimitent entre elles un dégagement central 64 dans lequel est agencé le ressort extérieur 48E de rappel élastique selon l'invention.

La poutre 60 s'étend dans un plan avant orthogonal à l'axe de coulissement du piston de frein 46, sensiblement au droit de l'axe de coulissement du piston de frein 46.

La conception de la portion avant 50, en coopération avec le profil du tronçon central 58 de la poutre 60, est telle qu'elle garantit la transmission des efforts uniquement selon l'axe A.

A partir de la portion avant 50 de solidarisation, et plus précisément à partir de la première branche rigide rectiligne B1, le ressort extérieur de rappel élastique 48E se prolonge successivement par trois autres branches rigides rectilignes B2, B3 et B4 respectivement qui forment un tronçon plié en accordéon déformable plastiquement.

Chaque branche rigide rectiligne Bi comporte une extrémité proximale Bip par rapport à la portion avant de solidarisation 50, et une extrémité distale Bid.

Ainsi, la première branche B1 a son extrémité proximale B1p reliée à la patte 52, tandis que son extrémité distale B1d est reliée à la deuxième branche rigide B2.

L'extrémité proximale B2p de la deuxième branche rigide B2 est reliée à l'extrémité distale B1d de la première branche rigide B1 par un premier pli P1 déformable plastiquement au tour d'un premier axe de déformation A1.

Comme la première branche B1, la deuxième branche rigide B2 est conformée en une bande dans le prolongement de la première branche rigide B1.

En position montée du ressort extérieur 48E de rappel élastique, le premier axe de déformation A1 est orthogonal à la direction axiale A de déplacement du patin de freinage extérieur 18E et il est horizontal et d'orientation transversale.

De façon à ce que le premier pli P1 en forme de coude constitue une zone déformable plastiquement, cette portion est affaiblie mécaniquement, ici au moyen d'une fenêtre ou lumière F1 qui est ici une découpe débouchante de forme rectangulaire et d'orientation selon l'axe A1.

L'invention n'est pas limitée à ce mode de réalisation de la zone déformable plastiquement constituant le pli P1, tout autre moyen de modification des caractéristiques mécaniques du matériau constitutif dans cette zone pour la rendre déformable plastiquement au sens de l'invention pouvant être utilisé, tel que par exemple une réduction de l'épaisseur du matériau dans cette zone.

De la même manière, l'extrémité proximale B3p de la troisième branche rigide B3 est reliée à l'extrémité distale B2d de la deuxième branche rigide B2 par un deuxième pli déformable plastiquement P2 qui est déformable autour d'un deuxième axe de déformation A2, parallèle au premier axe de déformation A1.

Le deuxième pli P2 est une portion coudée de la bande de matériau comportant une fenêtre F2.

Enfin, l'extrémité proximale B4p de la quatrième branche B4 est reliée à l'extrémité distale B3d de la troisième branche rigide B3 par un troisième pli déformable plastiquement P3 permettant une déformation autour d'un troisième axe de déformation A3, parallèle au premier axe de déformation A1.

Le troisième pli P3 comporte une fenêtre F3 analogue aux fenêtres F1 et F2.

La quatrième branche rigide B4 est rectiligne, et à titre non limitatif, elle se prolonge ici par une patte active 62 destinée à être reliée directement, ou indirectement, au patin de freinage extérieur 18E.

Au sens de l'invention, la patte active 62 constitue une portion arrière de liaison du ressort extérieur de rappel élastique 48E qui est fixée, ici directement, à une portion centrale associée 63 du patin de freinage extérieur.

La patte active 62 est ici réalisée par prolongement de la bande constitutive des branches Bi et elle s'étend depuis l'extrémité distale B4d de la quatrième branche rigide B4 dans un plan vertical orthogonal à l'axe de coulissement du patin extérieur de freinage 18E.

A titre d'exemple, la patte active 62 peut comporter un trou axial, ou plusieurs trous, débouchant (non représenté) susceptible de permettre sa fixation sur une partie associée du patin de freinage extérieur 18E, et par exemple de la face avant de sa plaque 19E porte-garniture de friction.

La portion centrale associée 63 du patin de freinage extérieur 18^{E} à laquelle est fixée la patte active 62 s'étend sensiblement au droit de l'axe de coulissement du piston de frein 46.

A titre non limitatif, chacune des branches Bi peut être rigidifiée par une zone emboutie Zi (non) représentée formée dans le corps constitutif de la chaque branche Bi.

La zone emboutie Z4 de rigidification de la quatrième branche rigide B4 peut se prolonge dans le corps de la patte active 62 de manière que le coude à angle droit 66 qui les relie soit lui-même rigide de façon à garantir, en utilisation, la conformation à angle aigu α4 entre la quatrième branche rigide B4 et la patte active 62.

Aux figures 2 à 5, le ressort extérieur de rappel élastique 48E est représenté dans un état initial "neuf", c'est-à-dire avant toute déformation plastique des plis Pi.

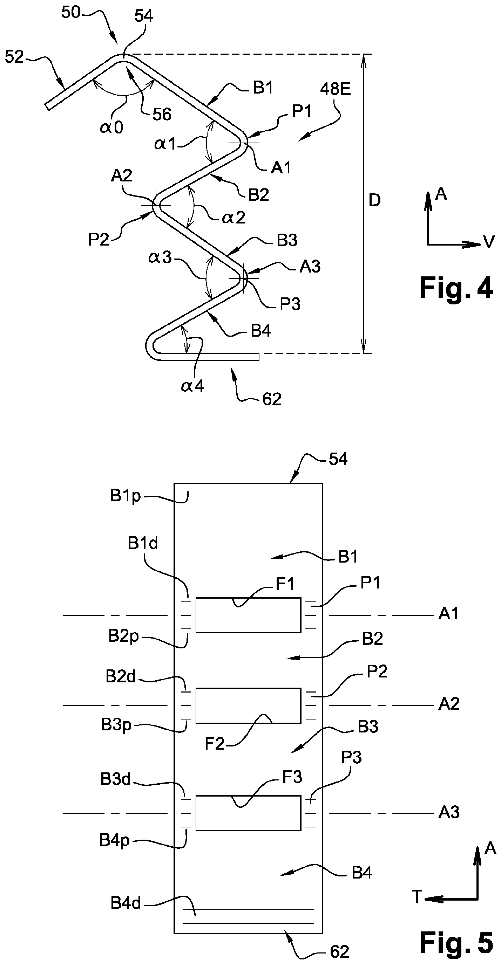

Dans cet état, neuf ou initial, le coude 54 et la patte active 62 sont agencés à une distance axiale D l'un de l'autre, c'est-à-dire espacés d'une distance D indiquée à la figure 4.

A titre d'exemple non limitatif, et comme illustré aux figures, la première branche rigide B1 et la deuxième branche rigide B2 forment entre elles un angle aigu α1, la deuxième branche rigide B2 et la troisième branche rigide B3 sont de longueur égale et elles forment entre elles un angle aigu α2, et la troisième branche rigide B3 et la quatrième branche rigide B4 forment entre elles un angle aigu α3.

Les angles α1, α2, et α3 sont sensiblement égaux.

La branche rigide B4 et la patte active 62 forment entre elles un angle aigu α4 inférieur aux angles α1, α2, et α3.

Dans un état (non représenté) de déformation plastique maximale du ressort extérieur de rappel élastique 48E, correspondant à un état d'usure maximal de la garniture de friction 25E, les trois plis P1, P2 et P3 sont déformés plastiquement, respectivement autour des axes de déformation A1, A2 et A3.

Chaque angle α1, α2 et α3 s'est alors ouvert de telle manière que la deuxième branche B2 et la troisième branche rigide B3 s'étendent axialement sensiblement dans le prolongement l'une de l'autre avec un angle α2 dont la valeur est proche d'un angle plat à 180 degrés.

Dans le mode de réalisation qui vient d'être décrit, le ressort de rappel élastique extérieur 48 est réalisé en une seule pièce par découpe, emboutissage et pliage d'une bande de largeur constante et de section rectangulaire.

A titre d'exemple, l'épaisseur de la bande de matériau est comprise entre 0,5 et 0,8 millimètre et le matériau est un acier inoxydable de référence X2CrNbCu21 ou de référence 304L (X2CrNi18-9 / X2CrNi1 9-11).

A titre d'exemple, le déplacement maximal correspondant à l'usure maximale J2 est égal à environ 14 millimètres.

Dans l'état neuf du patin de frein extérieur 18E et du ressort 48E de rappel élastique, le patin de freinage extérieur 18E est agencé axialement en avant du disque 12 et la face transversale avant de friction 25E de la garniture de friction 24E est à une distance égale à la somme :
- du jeu "J1" déterminé de fonctionnement ; et
- d'un jeu "J2" d'usure.

Le ressort extérieur de rappel élastique 48E, et ses parties déformables élastiquement, est alors dans son état de repos.

Lorsque le patin de freinage extérieur 18E est sollicité vers sa position active par l'étrier 36, il parcourt tout d'abord le trajet correspondant au jeu "J1" déterminé de fonctionnement.

Lors de cette première partie de la course, le patin de freinage extérieur 18E entraîne la patte active 62 du ressort extérieur de rappel élastique 48E et la branche rigide B4 de manière à tendre élastiquement le ressort extérieur de rappel élastique 48E entre la portion avant 50 solidaire du support 14, et la patte active 62 fixée au patin de freinage 18.

Les parties déformables élastiquement du ressort extérieur de rappel élastique 48E atteignent alors leur état d'élongation maximale.

La face transversale arrière de la garniture de friction 24E du patin de freinage extérieur 18E est encore écartée, par rapport à la face ou piste annulaire associée 22E du disque de frein 12, d'une distance égale au jeu "J2" d'usure. Le patin de freinage extérieur 18E poursuit donc sa course axiale jusqu'à sa position active.

Lors de cette deuxième partie de course, les plis Pi déformables plastiquement subissent un effort qui tend à provoquer des déformations angulaires des plis Pi autour des axes de déformation associés Ai.

Les plis Pi sont alors déformés plastiquement, les déformations élastiques des parties déformables plastiquement étant négligeables par rapport à leur déformation plastique.

Lorsque l'opération de freinage prend fin, le patin de freinage extérieur 18E est rappelé vers sa position inactive par les plis qui reprennent un état de repos.

Le patin de freinage extérieur 18E est ainsi à nouveau écarté du disque 12 d'une distance égale au seul jeu "J1" déterminé de fonctionnement ; le jeu "J2" d'usure ayant été absorbé par la déformation plastique des plis Pi déformables plastiquement.

Le ressort extérieur de rappel élastique 48E permet ainsi de garantir que le patin de freinage extérieur 18E est rappelé dans sa position inactive.

De plus, l'agencement de plis Pi déformables plastiquement permet d'éviter que l'effort de serrage à exercer par le piston 46 pour actionner le patin de freinage extérieur 18E vers sa position active ne devienne trop élevé.

En outre, en conservant un jeu "J1" de fonctionnement constant entre le patin de freinage extérieur 18E en position inactive et le disque 12, le temps de réponse du système de freinage demeure constant indépendamment de l'usure de la garniture de friction 24E.

La fonction du ressort extérieur de rappel élastique 48E est ainsi de « supprimer » tout contact entre la garniture de friction et le disque de frein lorsque la pression hydraulique de freinage appliquée au piston 46 est nulle.

Pour le choix du matériau dans lequel est réalisé un ressort 48 de rappel élastique, de préférence mais à titre non limitatif, l'allongement à la rupture "A", la résistance à la traction ou tension de rupture Rm, et la limite conventionnelle élastique Rp0,2 sont choisis dans les plages suivantes de valeurs :
- 30 < A% < 60 % ; de préférence 40 < A% < 60 % ; et de préférence encore 50 < A% < 60 %,
- 400 < Rm < 1000 MPa ; de préférence 400 < Rm < 700 MPa ; et de préférence encore 400 < Rm < 600 MPa,
- 0 < Rp0.2 < 500 MPa ; de préférence 150 < Rp0.2 < 400 MPa ; et de préférence encore 200 < Rp0.2 < 300 MPa,
   avec 1 MPa = 106 Pa.

Pour le rappel du patin de freinage intérieur 18I vers sa position inactive de repos, le patin de freinage intérieur 18I peut être solidarisé en déplacement axial avec le piston de frein 46, par exemple au moyen d'un ressort (non représenté) de "clipsage", c'est-à-dire emboîté élastiquement. Ainsi, quand la pression hydraulique agissant sur le piston de frein 46 est relâchée, le recul axial vers l'arrière du piston 46 dans son alésage, le piston de frein 46 entraîne le patin intérieur de freinage 18I et tout couple de frottement résiduel entre le patin intérieur de freinage 18I et le disque de frein 12 est supprimé.

Dans cette conception, il n'est pas nécessaire d'équiper le patin de freinage intérieur 18I de ressorts de rappel extérieur.

On a représenté schématiquement à la figure 9A, un ressort 100 de montage du patin susceptible d'équiper les oreilles 26 d'un patin de freinage, et notamment du patin de freinage extérieur 18E pour le montage et le guidage du patin de freinage extérieur 18E dans les coulisses axiales associées 28 du support 14, avec ou non la présence de glissières 34.

De manière connue, chaque ressort de patin 100 comporte une branche inférieure 102 de glissement qui coopère avec une face horizontale inférieure de la coulisse associée et qui sollicite une facette horizontale supérieure de l'oreille 26 en appui verticalement vers le haut contre une face supérieure en vis-à-vis de la coulisse 28.

Selon la conformation illustrée à la figure 9A, le ressort de patin 100 est communément appelé "ressort escargot" et il comporte une branche 104 prenant appui sous une facette inférieure horizontale de l'oreille 26 du patin de freinage extérieur 18E, cette branche 104 faisant partie d'une branche de fixation, ou agrafe, 106 qui pince élastiquement l'oreille 26 pour assurer la fixation du ressort de patin 100 sur l'oreille 26.

Le ressort de patin 100 comporte encore une branche incurvée 108 qui relie la branche de fixation 106 à la branche inférieure 102 de glissement en assurant principalement l'élasticité du ressort de patin 100.

A usure complète maximale de la garniture de friction, le ressort extérieur de rappel élastique 48E est déformé plastiquement et, comme le patin de freinage extérieur usé 18E, il doit être remplacé.

Ainsi, un ensemble ou kit de remplacement d'un jeu usagé de patins de freinage comporte, pour le patin de freinage extérieur, un patin de freinage extérieur 18E neuf proprement dit et un ressort extérieur de rappel élastique 48E.

Si le patin de freinage est du type équipé de ressorts 100 de montage de patin, le kit de remplacement comporte le patin neuf équipé de son ressort extérieur de rappel élastique 48E et de ses deux ressorts de patin 100, un pour chacune de ses deux oreilles radiales 26.

La conception selon l'invention du ressort extérieur 48E de rappel élastique n'est pas limitée au mode principal de réalisation qui vient d'être décrit.

Elle peut notamment varier de manière importante en ce qui concerne la conception de la partie de liaison, ou de raccordement de l'extrémité distale B4d de la quatrième branche rigide B4 avec le patin de freinage extérieur 18E pour agir, directement ou indirectement, sur celui-ci.

Elle peut aussi varier de par la conception de la portion avant 50 de solidarisation.

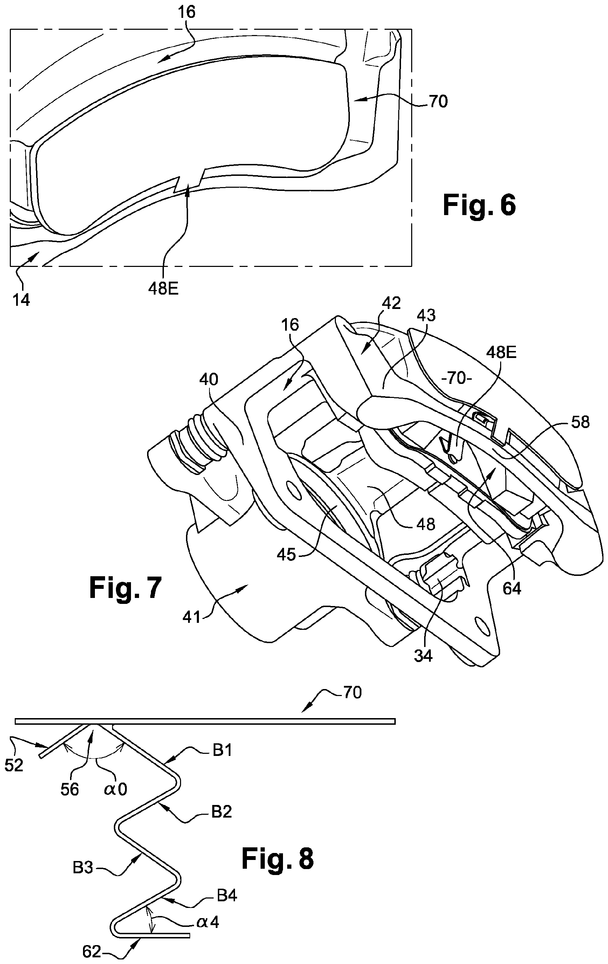

On a représenté aux figures 6 à 7 une variante de réalisation du ressort extérieur de rappel élastique 48E selon laquelle le ressort extérieur comporte une plaque fonctionnelle 70 reliée à la portion avant 50 de solidarisation et qui s'étend dans un plan avant orthogonal à l'axe de coulissement du piston de frein 46.

Le ressort extérieur de rappel élastique 48E peut être réalisé en une seule pièce avec la plaque fonctionnelle 70, ou lui être fixée, par exemple par soudage.

A titre d'exemple non limitatif, la plaque 70 peut constituer un support pour des représentations graphiques telles qu'un marquage ou une décoration. La conformation de la plaque, le choix de son matériau constitutif, etc., permettent aussi d'assurer d'autres fonctions à caractère technique et associées au bon fonctionnement du frein.

Le dimensionnement de la plaque fonctionnelle 70 est tel que, quelle que soit la position axiale de l'étrier 16 et du patin extérieur de freinage 18E, la plaque fonctionnelle 70 n'interfère jamais avec les parties environnantes de l'étrier 16.

## Revendications

1. Frein à disque (10) de véhicule automobile qui comporte :
- un disque (12) de frein qui s'étend dans un plan transversal à un axe (A) d'orientation axiale de rotation du disque ;
- un support (14) fixe par rapport à un châssis du véhicule ;
- un étrier (36) qui est monté coulissant axialement par rapport au support fixe (14) et qui comporte :
-- un boîtier arrière (41) dans lequel un piston de frein (46) est monté coulissant axialement pour coopérer, vers l'avant, avec un patin de freinage (18I) intérieur qui comporte une garniture (24I) de friction dont une face transversale avant de friction (25I) coopère avec une piste de freinage (22I) associée du disque (12) ;
-- une aile avant (42), solidaire axialement du boîtier (41) pour coopérer avec un patin de freinage extérieur (18E) qui comporte une garniture (24E) de friction dont une face transversale arrière de friction (25E) coopère avec une piste de freinage (22E) associée du disque (12) ;
- le patin de freinage extérieur (18E) étant monté coulissant axialement dans le support fixe (14) entre une position arrière active dans laquelle ladite face (25E) de friction est en appui contre la piste annulaire associée (22E) du disque de frein (12), et une position avant inactive dans laquelle ladite face transversale arrière de friction (25E) est espacée axialement de ladite piste annulaire associée (22E) du disque de frein, d'un jeu (J1) déterminé de fonctionnement,
**caractérisé en ce que** le frein à disque comporte un ressort extérieur (48E) de rappel élastique du patin de freinage extérieur (18E) vers sa position inactive, **en ce qu'**une portion arrière de liaison (62) du ressort extérieur de rappel élastique (48E) est fixée, directement ou indirectement, à une portion centrale associée (63) du patin de freinage extérieur (18E), et **en ce qu'**une portion avant (50) du ressort extérieur de rappel élastique (48E) est solidaire axialement d'une portion centrale associée (58) du support fixe (14).

2. Frein à disque selon la revendication 1, **caractérisé en ce que** le patin de freinage intérieur (18I) est solidaire en déplacement axial avec le piston de frein (46).

3. Frein à disque selon la revendication 1, **caractérisé en ce que** le ressort extérieur (48E) de rappel élastique du patin de freinage extérieur (18E) vers sa position inactive comporte des moyens, de rattrapage d'un jeu d'usure (J2) de la garniture de friction (24E) du patin de freinage extérieur (18E), qui se déforment plastiquement lorsqu'une course du patin de freinage extérieur (18E), selon une direction axiale de déplacement, jusqu'à une position active de freinage est supérieure audit jeu déterminé de fonctionnement (J1).

4. Frein à disque selon la revendication 1, **caractérisé en ce que** ladite portion centrale associée (63) du patin de freinage extérieur (18E) s'étend sensiblement au droit de l'axe de coulissement du piston de frein (46).

5. Frein à disque selon la revendication 1, **caractérisé en ce que** ladite portion centrale associée du support fixe (14) est constituée par un tronçon central (58) d'une poutre (60) du support fixe (14) qui s'étend dans un plan avant orthogonal à l'axe de coulissement du piston de frein (46), sensiblement au droit de cet axe de coulissement du piston de frein (46).

6. Frein à disque selon la revendication 1, **caractérisé en ce que** l'aile avant (42) de l'étier (36) comporte deux parties latérales (43) espacées transversalement, qui s'étendent symétriquement par rapport à l'axe de coulissement du piston de frein (46), et qui délimitent entre elles un dégagement central (64) dans lequel est agencé le ressort extérieur (48E) de rappel élastique.

7. Frein à disque (10) selon la revendication 3, **caractérisé en ce que** lesdits moyens qui se déforment plastiquement comportent un tronçon (P1-B2-P2-B3-P3) déformable plastiquement qui est formé par un pliage en accordéon qui s'étend entre ladite portion arrière de liaison (62) et ladite portion avant (50) de solidarisation du ressort extérieur de rappel élastique (48E).

8. Frein à disque selon la revendication précédente, **caractérisé en ce que** le ressort extérieur de rappel élastique (48E) comporte successivement au moins :
- ladite portion avant (50) de solidarisation du ressort extérieur de rappel élastique (48E) avec le support fixe (14) ;
- une deuxième branche rigide (B2) dont une extrémité proximale (B2p) est reliée à la portion (50) de solidarisation, par un premier pli déformable plastiquement (P1), autour d'un premier axe de déformation (A1) orthogonal à la direction axiale (A) de déplacement du patin de freinage extérieur (18E) et parallèle au plan dans lequel s'étend la deuxième branche rigide (B2) ;
- une troisième branche rigide (B3) dont une extrémité proximale (B3p) est reliée à une extrémité distale (B2d) de la deuxième branche rigide (B2) par un deuxième pli déformable plastiquement (P2), autour d'un deuxième axe de déformation (A2) parallèle au premier axe de déformation (A1) ;
- une quatrième branche rigide (B4), dont une extrémité proximale (B4p) est reliée à une extrémité distale (B4d) de la troisième branche rigide (B3) par un troisième pli déformable plastiquement (P3), autour d'un troisième axe de déformation (A3) parallèle au premier axe de déformation (A1), et qui est fixée à ladite portion centrale associée (63) du patin de freinage extérieur (18E) pour constituer ladite portion arrière de liaison (62) du ressort extérieur de rappel élastique (48E) ;
**en ce que** chaque branche rigide (B2, B3, B4) est une bande qui s'étend globalement dans un plan parallèle au premier axe de déformation (A1) ; et **en ce que** la quatrième branche rigide (B4) est espacée axialement (D) par rapport à la portion de fixation (50).

9. Frein à disque selon la revendication 7, **caractérisé en ce que** la portion avant (50) de solidarisation du ressort extérieur de rappel élastique (48E) avec le support fixe (14) comporte une première branche rigide (B1) qui est une bande qui s'étend dans un plan parallèle au premier axe de déformation (A1), et **en ce que** l'extrémité proximale (B2p) de la deuxième branche rigide (B2) est reliée à une extrémité distale (B1d) de la première branche rigide (B1) par le premier pli déformable plastiquement (P1).

10. Frein à disque selon la revendication 9 prise en combinaison avec la revendication 5, **caractérisé en ce que** la portion avant (50) de solidarisation du ressort extérieur de rappel élastique (48E) avec le support fixe (14) comporte une patte rigide qui prolonge une extrémité proximale (B1p) de la première branche rigide (B1) pour constituer un coude formant crochet dont une portion concave reçoit ledit tronçon central (58) de la poutre (60) du support fixe (14).

11. Frein à disque selon l'une quelconque des revendications 7 à 10, **caractérisé en ce que** chaque branche rigide (B1, B2, B3, B4) est rectiligne.

12. Frein à disque selon l'une quelconque des revendications 7 à 11, **caractérisé en ce que** chaque branche rigide (B1, B2, B3, B4) comporte des moyens de rigidification (Z1, Z2, Z3).

13. Frein à disque selon l'une quelconque des revendications 7 à 12, **caractérisé en ce que** chaque pli déformable élastiquement (P1, P2, P3) comporte une zone (F1, F2, F3) d'affaiblissement de ses propriétés mécaniques.

14. Frein à disque selon l'une quelconque des revendications 7 à 13, **caractérisé en ce que** chaque pli déformable élastiquement (P1, P2, P3) est une portion coudée d'une bande comportant une fenêtre (F1, F2, F3) d'orientation parallèle au premier axe de déformation (A1).

15. Frein à disque selon l'une quelconque des revendications précédentes, **caractérisé en ce que** le ressort extérieur de rappel élastique (48E) est réalisé en une seule pièce par découpe et formage d'une feuille de matériau.

16. Frein à disque selon la revendication 15, **caractérisé en ce que** le ressort extérieur de rappel élastique (48E) est réalisé en une seule pièce par découpe, emboutissage et pliage d'une feuille de métal.

17. Frein à disque selon l'une quelconque des revendications 7 à 14, **caractérisé en ce que** les branches rigides (B1, B2, B3, B4) et les plis (P1, P2, P3) sont réalisés en une seule pièce par découpe emboutissage et pliage d'une bande de largeur constante.

18. Frein à disque selon la revendication 9, **caractérisé en ce que**, dans un état avant toute déformation plastique des plis (P1, P2, P3), la première branche rigide (B1) et la deuxième branche rigide (B2) forment un angle (α1) égal à l'angle (α2) que forment la deuxième branche rigide (B2) et la troisième branche rigide (B3), et égal à l'angle (α3) que forment la troisième branche rigide (B3) et la troisième branche rigide (B4).

19. Frein à disque selon l'une quelconque des revendications précédentes, **caractérisé en ce que** le ressort extérieur de rappel élastique (48E) est réalisé dans un matériau choisi dans un groupe comportant notamment l'acier inoxydable, l'acier X2CrNbCu21, l'acier 304L, l'or, le plomb, un matériau synthétique, un matériau synthétique à matrice polymérique renforcé par des fibres naturelles ou synthétiques.

20. Frein à disque selon l'une quelconque des revendications précédentes, **caractérisé en ce que** le ressort extérieur de rappel élastique (48E) est réalisé dans un matériau dont l'allongement à la rupture (A%) est compris entre 30 et 60%, dont la résistance à la traction (Rm) est comprise entre 400M Pa et 1000 MPa, et dont la limite conventionnelle élastique (Rp0,2) est comprise entre 0 et 500 MPa.

21. Frein à disque selon la revendication précédente, **caractérisé en ce que** le ressort extérieur de rappel élastique (48E) est réalisé dans un matériau dont l'allongement à la rupture (A%) est compris entre 40 et 60%, dont la résistance à la traction (Rm) est comprise entre 400M Pa et 700 MPa, et dont la limite conventionnelle élastique (Rp0,2) est comprise entre 150 et 400 MPa.

22. Frein à disque selon la revendication précédente, **caractérisé en ce que** le ressort extérieur de rappel élastique (48E) est réalisé dans un matériau dont l'allongement à la rupture (A%) est compris entre 50 et 60%, dont la résistance à la traction (Rm) est comprise entre 400M Pa et 600 MPa, et dont la limite conventionnelle élastique (Rp0,2) est comprise entre 200 et 300 MPa.

23. Frein à disque (10) selon l'une quelconque des revendications précédentes, **caractérisé en ce que** le ressort extérieur (48E) de rappel élastique comporte une plaque fonctionnelle (70) reliée à ladite portion avant (50) de solidarisation et qui s'étend dans un plan avant orthogonal à l'axe de coulissement du piston de frein (46).

24. Frein à disque selon la revendication 22, **caractérisé en ce que** le ressort extérieur de rappel élastique (48E) est réalisé en une seule pièce avec ladite plaque fonctionnelle (70).

25. Frein à disque (10) selon la revendication 1, **caractérisé en ce que** le patin de freinage extérieur (18E) comporte au moins une oreille (26) latérale de guidage en coulissement qui est reçue dans une coulisse (28) axiale du support fixe (14).

26. Frein à disque (10) selon la revendication 24, **caractérisé en ce qu'**il comporte une glissière (32) qui épouse les parois de la coulisse (28) et qui est fixée au support fixe (14).

27. Ressort extérieur de rappel élastique (48E) d'un patin de frein extérieur (18E) de frein à disque (10) vers une position inactive, comprenant une portion arrière de liaison (62) prévue pour être fixée, directement ou indirectement, à une portion centrale associée (63) du patin de freinage extérieur (18E), et une portion avant (50) prévue pour être solidarisée axialement à une portion centrale associée (58) de support fixe (14) du frein à disque (10).

28. Kit de remplacement pour un frein à disque (10) de véhicule automobile selon l'une quelconque des revendications 1 à 25, incluant un patin de freinage extérieur (18E) et un ressort extérieur de rappel élastique (48E) selon la revendication 27 qui est apparié audit patin de freinage extérieur (18E).

29. Kit de remplacement selon la revendication 28, **caractérisé en ce qu'**il comporte de plus deux ressorts (100) de montage du patin de frein extérieur (18E).

## Patentansprüche

1. Scheibenbremse (10) für ein Kraftfahrzeug, umfassend:
- eine Bremsscheibe (12), die sich in einer Ebene quer zu einer Drehachse (A) der Scheibe mit axialer Orientierung erstreckt;
- einen Träger (14), der bezüglich eines Fahrzeugrahmens fest ist;
- einen Sattel (36), der bezüglich des festen Trägers (14) axial verschiebbar montiert ist, und der Folgendes umfasst:
- - ein hinteres Gehäuse (41), in dem ein Bremskolben (46) axial verschiebbar montiert ist, um nach vorne mit einem inneren Bremsbelagträger (181) zusammenzuwirken, der einen Reibbelag (241) umfasst, bei dem eine vordere Querreibfläche (251) mit einer zugeordneten Bremsfläche (221) der Scheibe (12) zusammenwirkt;
- - einen vorderen Flügel (42), der axial mit dem Gehäuse (41) verbunden ist, um mit einem äußeren Bremsbelagträger (18E) zusammenzuwirken, der einen Reibbelag (24E) umfasst, bei dem eine hintere Querreibfläche (25E) mit einer zugeordneten Bremsfläche (22E) der Scheibe (12) zusammenwirkt;
- wobei der äußere Bremsbelagträger (18E) in dem festen Träger (14) axial verschiebbar montiert ist zwischen einer hinteren aktiven Position, in der die Reibfläche (25E) in Anlage ist gegen die zugeordnete ringförmige Fläche (22E) der Bremsscheibe (12), und einer vorderen inaktiven Position, in der die hintere Querreibfläche (25E) axial von der zugeordneten ringförmigen Fläche (22E) der Bremsscheibe um ein vorbestimmtes Funktionsspiel (J1) beabstandet ist, **dadurch gekennzeichnet, dass** die Scheibenbremse eine äußere Feder (48E) zum elastischen Rückstellen des äußeren Bremsbelagträgers (18E) in seine inaktive Position umfasst, und dass ein hinterer Verbindungsbereich (62) der äußeren elastischen Rückstellfeder (48E) direkt oder indirekt an einem zugeordneten zentralen Bereich (63) des äußeren Bremsbelagträgers (18E) befestigt ist, und dass ein vorderer Bereich (50) der äußeren elastischen Rückstellfeder (48E) axial mit einem zugeordneten zentralen Bereich (58) des festen Trägers (14 verbunden ist.

2. Scheibenbremse nach Anspruch 1, **dadurch gekennzeichnet, dass** der innere Bremsbelagträger (181) zur axialen Verlagerung mit dem Bremskolben (46 verbunden ist.

3. Scheibenbremse nach Anspruch 1, **dadurch gekennzeichnet, dass** die äußere Feder (48E) zum elastischen Rückstellen des äußeren Bremsbelagträgers (18E) in seine inaktive Position Mittel zur Kompensation eines Abnutzungsspiels (J2) der Reibgarnitur (24E) des äußeren Bremsbelagträgers (18E) umfasst, die sich plastisch verformen, wenn ein Weg des äußeren Bremsbelagträgers (18E) entlang einer axialen Verlagerungsrichtung bis zu einer aktiven Bremsposition größer ist als das vorbestimmte Funktionsspiel (J1).

4. Scheibenbremse nach Anspruch 1, **dadurch gekennzeichnet, dass** der zugeordnete zentrale Bereich (63) des äußeren Bremsbelagträgers (18E) sich im Wesentlichen an der Verschiebeachse des Bremskolbens (46) erstreckt.

5. Scheibenbremse nach Anspruch 1, **dadurch gekennzeichnet, dass** der zugeordnete zentrale Bereich des festen Trägers (14) durch einen zentralen Abschnitt (58) eines Balkens (60) des festen Trägers (14) gebildet ist, der sich in einer vorderen Ebene orthogonal zur Verschiebeachse des Bremskolbens (46) im Wesentlichen an dieser Verschiebeachse des Bremskolbens (46) erstreckt.

6. Scheibenbremse nach Anspruch 1, **dadurch gekennzeichnet, dass** der vordere Flügel (42) des Sattels (36) zwei in Querrichtung beabstandete Seitenteile (43) umfasst, die sich bezüglich der Verschiebeachse des Bremskolbens (46) symmetrisch erstrecken, und die zwischen sich eine zentrale Aussparung (64) begrenzen, in der die äußere elastische Rückstellfeder (48E) angeordnet ist.

7. Scheibenbremse (10) nach Anspruch 3, **dadurch gekennzeichnet, dass** die sich plastisch verformenden Mittel einen plastisch verformbaren Abschnitt (P1-B2-P2-B3-P3) umfassen, der durch eine Akkordeonfaltung gebildet ist, die sich zwischen dem hinteren Verbindungsbereich (62) und dem vorderen Bereich (50) zur Anbringung der äußeren elastischen Rückstellfeder (48E) erstreckt.

8. Scheibenbremse nach dem vorhergehenden Anspruch, **dadurch gekennzeichnet, dass** die äußere elastische Rückstellfeder (48E) nacheinander wenigstens Folgendes umfasst:
- den vorderen Bereich (50) zur Verbindung der äußeren elastischen Rückstellfeder (48E) mit dem festen Träger (14);
- einen zweiten starren Arm (B2), bei dem ein proximales Ende (B2p) mit dem Verbindungsbereich (50) durch einen ersten Knick (P1) verbunden ist, der plastisch verformbar ist um eine erste Verformungsachse (A1) orthogonal zur axialen Verlagerungsrichtung (A) des äußeren Bremsbelagträgers (18E) und parallel zur Ebene, in der sich der zweite starre Arm (B2) erstreckt;
- einen dritten starren Arm (B3), bei dem ein proximales Ende (B3p) mit einem distalen Ende (B2d) des zweiten starren Arms (B2) durch einen zweiten Knick (P2) verbunden ist, der plastisch verformbar ist um eine zweite Verformungsachse (A2) parallel zur ersten Verformungsachse (A1) herum;
- einen vierten starren Arm (B4),bei dem ein proximales Ende (B4p) mit einem distalen Ende (B4d) des dritten starren Arms (B3) durch einen dritten Knick (P3) verbunden ist, der plastisch verformbar ist um eine dritte Verformungsachse (A3) parallel zur ersten Verformungsachse (A1) herum, und an dem zugeordneten zentralen Bereich (63) des äußeren Bremsbelagträgers (18E) befestigt ist, um den hinteren Verbindungsbereich (62) der äußeren elastischen Rückstellfeder (48E) zu bilden; und dass jeder starre Arm (B2, B3, B4) ein Band ist, das sich im Wesentlichen in einer Ebene parallel zur ersten Verformungsachse (A1) erstreckt;
und dass der vierte starre Arm (B4) axial bezüglich des Befestigungsbereichs (50) beabstandet ist.

9. Scheibenbremse nach Anspruch 7, **dadurch gekennzeichnet, dass** der vordere Bereich (50) zur Verbindung der äußeren elastischen Rückstellfeder (48E) mit dem festen Träger (14) einen ersten starren Arm (B1) umfasst, der ein Band ist, das sich in einer Ebene parallel zur ersten Verformungsachse (A1) erstreckt, und dass das proximale Ende (B2p) des zweiten starren Arms (B2) mit einem distalen Ende (B1d) des ersten starren Arms (B1) durch den ersten plastisch verformbaren Knick (P1) verbunden ist.

10. Scheibenbremse nach Anspruch 9, in Kombination mit Anspruch 5, **dadurch gekennzeichnet, dass** der vordere Bereich (50) zur Verbindung der äußeren elastischen Rückstellfeder (48E) mit dem festen Träger (14) eine starre Klaue umfasst, die ein proximales Ende (B1p) des ersten starren Arms (B1) verlängert, um eine Biegung zu bilden, die einen Haken bildet, von dem ein konkaver Bereich den zentralen Abschnitt (58) des Balkens (60) des festen Trägers (14) aufnimmt.

11. Scheibenbremse nach einem der Ansprüche 7 bis 10, **dadurch gekennzeichnet, dass** jeder starre Arm (B1, B2, B3, B4) geradlinig ist.

12. Scheibenbremse nach einem der Ansprüche 7 bis 11, **dadurch gekennzeichnet, dass** jeder starre Arm (B1, B2, B3, B4) Aussteifungsmittel (Z1, Z2, Z3) umfasst.

13. Scheibenbremse nach einem der Ansprüche 7 bis 12, **dadurch gekennzeichnet, dass** jeder elastisch verformbare Knick (P1, P2, P3) eine Zone (F1, F2, F3) zur Schwächung seiner mechanischen Eigenschaften umfasst.

14. Scheibenbremse nach einem der Ansprüche 7 bis 13, **dadurch gekennzeichnet, dass** jeder elastisch verformbare Knick (P1, P2, P3) ein gebogener Bereich eines Bands ist, das ein Fenster (F1, F2, F3) mit einer Orientierung parallel zur ersten Verformungsachse (A1) umfasst.

15. Scheibenbremse nach einem der vorhergehenden Ansprüche, **dadurch gekennzeichnet, dass** die äußere elastische Rückstellfeder (48E) einstückig durch Ausschneiden und Formen einer Materialschicht realisiert ist.

16. Scheibenbremse nach Anspruch 15, **dadurch gekennzeichnet, dass** die äußere elastische Rückstellfeder (48E) einstückig durch Ausschneiden, Tiefziehen und Falten einer Materialschicht realisiert ist.

17. Scheibenbremse nach einem der Ansprüche 7 bis 14, **dadurch gekennzeichnet, dass** die starren Arme (B1, B2, B3, B4) und die Knicke (P1, P2, P3) einstückig durch Ausschneiden, Tiefziehen und Falten eines Bands mit konstanter Breite realisiert sind.

18. Scheibenbremse nach Anspruch 9, **dadurch gekennzeichnet, dass** in einem Zustand vor jeglicher plastischer Verformung der Knicke (P1, P2, P3) der erste starre Arm (B1) und der zweite starre Arm (B2) einen Winkel (*α*1) gleich dem Winkel (*α*2) bilden, den der zweite starre Arm (B2) und der dritte starre Arm (B3) bilden, und gleich dem Winkel (*α*3), den der dritte starre Arm (B3) und der vierte starre Arm (B4) bilden.

19. Scheibenbremse nach einem der vorhergehenden Ansprüche, **dadurch gekennzeichnet, dass** die äußere elastische Rückstellfeder (48E) aus einem Material realisiert ist, ausgewählt aus einer Gruppe umfassend insbesondere rostfreien Stahl, den Stahl X2CrNbCu21, den Stahl 304L, Gold, Blei, ein Kunststoffmaterial, ein Kunststoffmaterial mit einer Polymermatrix, verstärkt durch natürliche oder synthetische Fasern.

20. Scheibenbremse nach einem der vorhergehenden Ansprüche, **dadurch gekennzeichnet, dass** die äußere elastische Rückstellfeder (48E) aus einem Material realisiert ist, dessen Bruchdehnung (A%) zwischen 30 und 60% enthalten ist, dessen Zugfestigkeit (Rm) zwischen 400 MPa und 1000 MPa enthalten ist, und dessen konventionelle Dehngrenze (Rp0,2) zwischen 0 und 500 MPa enthalten ist.

21. Scheibenbremse nach dem vorhergehenden Anspruch, **dadurch gekennzeichnet, dass** die äußere elastische Rückstellfeder (48E) aus einem Material realisiert ist, dessen Bruchdehnung (A%) zwischen 40 und 60% enthalten ist, dessen Zugfestigkeit (Rm) zwischen 400 MPa und 700 MPa enthalten ist, und dessen konventionelle Dehngrenze (Rp0,2) zwischen 150 und 400 MPa enthalten ist.

22. Scheibenbremse nach dem vorhergehenden Anspruch, **dadurch gekennzeichnet, dass** die äußere elastische Rückstellfeder (48E) aus einem Material realisiert ist, dessen Bruchdehnung (A%) zwischen 50 und 60% enthalten ist, dessen Zugfestigkeit (Rm) zwischen 400 MPa und 600 MPa enthalten ist, und dessen konventionelle Dehngrenze (Rp0,2) zwischen 200 und 300 MPa enthalten ist.

23. Scheibenbremse (10) nach einem der vorhergehenden Ansprüche, **dadurch gekennzeichnet, dass** die äußere elastische Rückstellfeder (48E) eine Funktionsplatte (70) umfasst, die mit dem vorderen Verbindungsbereich (50) verbunden ist, und die sich in einer vorderen Ebene orthogonal zur Verschiebeachse des Bremskolbens (46) erstreckt.

24. Scheibenbremse nach Anspruch 22, **dadurch gekennzeichnet, dass** die äußere elastische Rückstellfeder (48E) einstückig mit der Funktionsplatte (70) realisiert ist.

25. Scheibenbremse (10) nach Anspruch 1, **dadurch gekennzeichnet, dass** der äußere Bremsbelagträger (18E) wenigstens ein seitliches Verschiebungsführungsohr (26) umfasst, das in einem axialen Schieber (28) des festen Trägers (14) aufgenommen ist.

26. Scheibenbremse (10) nach Anspruch 24, **dadurch gekennzeichnet, dass** sie eine Gleitführung (32) umfasst, die an die Wände des Schiebers (28) angepasst ist und die am festen Träger (14) befestigt ist.

27. Äußere Feder (48E) zum elastischen Rückstellen eines äußeren Bremsbelagträgers (18E) einer Scheibenbremse (10) in eine inaktive Position, umfassend einen hinteren Verbindungsbereich (62), der dazu vorgesehen ist, direkt oder indirekt an einem zugeordneten zentralen Bereich (63) des äußeren Bremsbelagträgers (18E) befestigt zu sein, und einen vorderen Bereich (50), der dazu vorgesehen ist, axial mit einem zugeordneten zentralen Bereich (58) des festen Trägers (14) der Scheibenbremse (10) verbunden zu sein.

28. Ersatzkit für eine Scheibenbremse (10) eines Kraftfahrzeugs nach einem der Ansprüche 1 bis 25, umfassend einen äußeren Bremsbelagträger (18E) und eine äußere elastische Rückstellfeder (48E) nach Anspruch 27, die mit dem äußeren Bremsbelagträger (18E) gepaart ist.

29. Ersatzkit nach Anspruch 28, **dadurch gekennzeichnet, dass** es ferner zwei Federn (100) zur Montage des äußeren Bremsbelagträgers (18E) umfasst.

## Claims

1. A motor vehicle disk brake (10) that includes:
- a brake disk (12) that lies in a plane transverse to an axially oriented rotation axis (A) of the disk;
- a support (14) fixed relative to a chassis of the vehicle;
- a caliper (36) that is mounted to slide axially relative to the fixed support (14) and that includes:
-- a rear casing (41) in which a brake piston (46) is mounted to slide axially to cooperate, toward the front, with an interior brake shoe (181) that includes a first friction lining (241) a transverse front friction face (251) of which cooperates with an associated first braking track (221) of the disk (12);
-- a front flange (42), axially fixed to the rear casing (41) to cooperate with an exterior brake shoe (18E) that includes a second friction lining (24E) a transverse rear friction face (25E) of which cooperates with an associated second braking track (22E) of the disk (12);
- the exterior brake shoe (18E) being mounted to slide axially in the fixed support (14) between a rear active position in which said transverse rear friction face (25E) bears against the associated annular track (22E) of the brake disk (12) and a front inactive position in which said transverse rear friction face (25E) is spaced axially from said associated annular track (22E) of the brake disk by a particular operating clearance (J1),
**characterized in that** the disk brake includes an exterior return spring (48E) for returning the exterior brake shoe (18E) to its inactive position, **in that** a rear connecting portion (62) of the exterior return spring (48E) is fixed, directly or indirectly, to an associated central portion (63) of the exterior brake shoe (18E), and **in that** a front fixing portion (50) of the exterior return spring (48E) is fixed axially to an associated central portion (58) of the fixed support (14).

2. The disk brake as claimed in claim 1, **characterized in that** the interior brake shoe (181) is constrained to move axially with the brake piston (46).

3. The disk brake as claimed in claim 1, **characterized in that** the exterior return spring (48E) for returning the exterior brake shoe (18E) to its inactive position includes means for compensating wear play (J2) of the second friction lining (24E) of the exterior brake shoe (18E) that are deformed plastically when the movement of the exterior brake shoe (18E) in an axial direction of movement as far as an active braking position is greater than said particular operating clearance (J1).

4. The disk brake as claimed in claim 1, **characterized in that** said associated central portion (63) of the exterior brake shoe (18E) is in line with the sliding axis of the brake piston (46).

5. The disk brake as claimed in claim 3, **characterized in that** said associated central portion of the fixed support (14) is constituted by a central section (58) of a beam (60) of the fixed support (14) that lies in a front plane orthogonal to the sliding axis of the brake piston (46), in line with this sliding axis of the brake piston (46).

6. The disk brake as claimed in claim 1, **characterized in that** the front flange (42) of the caliper (36) includes two transversely spaced lateral parts (43) that are symmetrical with respect to the sliding axis of the brake piston (46) and delimit between them a central recess (64) in which the exterior return spring (48E) is arranged.

7. The disk brake (10) according to claim 5, **characterized in that** said means that are deformed plastically include a plastically deformable section (P1-B2-P2-B3-P3) that is formed by an accordion fold that extends between said rear connecting portion (62) and said front fixing portion (50) of the exterior return spring (48E).

8. The disk brake as claimed in claim 7, **characterized in that** the exterior return spring (48E) includes successively at least:
said front fixing portion (50) for fixing the exterior return spring (48E) to the fixed support (14);
a second rigid branch (B2) a proximal end (B2p) of which is connected to the front fixing portion (50) by a first bend (P1 plastically deformable about a first deformation axis (A1) orthogonal to the axial direction (A) of movement of the exterior brake shoe (18E) and parallel to the plane in which the second rigid branch (B2) lies;
a third rigid branch (B3) a proximal end (B3p) of which is connected to a distal end (B2d) of the second rigid branch (B2) by a second bend (P2) plastically deformable about a second deformation axis (A2) parallel to the first deformation axis (A1);
a fourth rigid branch (B4) a proximal end (B4p) of which is connected to a distal end (B4d) of the third rigid branch (B3) by a third bend (P3) plastically deformable about a third deformation axis (A3) parallel to the first deformation axis (A1), and that is fixed to said associated central portion (63) of the exterior brake shoe (18E) to constitute said rear connecting portion (62) of the exterior return spring (48E);
**in that** each rigid branch (B2, B3, B4) is a strip that lies globally in a plane parallel to the first deformation axis (A1);
and **in that** the fourth rigid branch (B4) is axially spaced (D) relative to the front fixing portion (50).

9. The disk brake as claimed in claim 8, **characterized in that** the front fixing portion (50) for fixing the exterior return spring (48E) to the fixed support (14) includes a first rigid branch (B1) that is a strip that lies in a plane parallel to the first deformation axis (A1) and **in that** the proximal end (B2p) of the second rigid branch (B2) is connected to a distal end (B1d) of the first rigid branch (B1) by the first bend (P1).

10. The disk brake as claimed in claim 9, **characterized in that** the front fixing portion (50) for fixing the exterior return spring (48E) to the fixed support (14) includes a rigid lug that extends a proximal end (B1p) of the first rigid branch (B1) to constitute a bend forming a hook a concave portion of which receives said central section (58) of the beam (60) of the fixed support (14).

11. The disk brake as claimed in claim 9 or 10, **characterized in that** each rigid branch (B1, B2, B3, B4) is straight.

12. The disk brake as claimed in claim 9 or 10, **characterized in that** each rigid branch (B1, B2, B3, B4) includes stiffening means (Z1, Z2, Z3).

13. The disk brake as claimed in any one of claims 8 to 10, **characterized in that** each plastically deformable bend (P1, P2, P3) includes an area (F1, F2, F3) of weakened mechanical properties.

14. The disk brake as claimed in any one of claims 8 to 10, **characterized in that** each plastically deformable bend (P1, P2, P3) is a bent portion of a strip including a window (F1, F2, F3) oriented parallel to the first deformation axis (A1).

15. The disk brake as claimed in any one of claims 1 to 10, **characterized in that** the exterior return spring (48E) is produced in one piece by cutting and shaping a sheet of material.

16. The disk brake as claimed in claim 15, **characterized in that** the exterior return spring (48E) is produced in one piece by cutting, pressing and bending a sheet of metal.

17. The disk brake as claimed in claim 9 or 10, **characterized in that** each rigid branches (B1, B2, B3, B4) and each bends (P1, P2, P3) are produced in one piece by cutting, pressing and bending a strip of constant width.

18. The disk brake as claimed in claim 9, **characterized in that**, in a state plastic deformation of each bends (P1, P2, P3), the first rigid branch (B1) and the second rigid branch (B2) form an angle (α1) equal to the angle (α2) that the second rigid branch (B2) and the third rigid branch (B3) form and equal to the angle (α3) that the third rigid branch (B3) and the fourth rigid branch (B4) form.

19. The disk brake as claimed in any one of claims 1 to 10, **characterized in that** the exterior return spring (48E) is made from a material selected from a group including stainless steel, X2CrNbCu21 steel, 304L steel, gold, lead, a synthetic material, a synthetic material with a polymer matrix reinforced by natural or synthetic fibers.

20. The disk brake as claimed in any one of claims 1 to 10, **characterized in that** the exterior return spring (48E) is made from a material the breaking strain of which is between 30% and 60%, the tensile strength of which is between 400 MPa and 1000 MPa and the 0.2% offset strain of which is between 0 and 500 MPa.

21. The disk brake as claimed in claim 20, **characterized in that** the exterior return spring (48E) is made from a material the breaking strain of which is between 40 and 60%, the tensile strength of which is between 400 MPa and 700 MPa, and the 0.2% offset strain of which is between 150 and 400 MPa.

22. The disk brake as claimed in claim 21, **characterized in that** the exterior return spring (48E) is made from a material the breaking strain of which is between 50 and 60%, the tensile strength of which is between 400 MPa and 600 MPa, and the 0.2% offset strain of which is between 200 and 300 MPa.

23. The disk brake (10) as claimed in any one of claims 1 to 10, **characterized in that** the exterior return spring (48E) includes a functional plate (70) connected to said front fixing portion (50) that lies in a front plane orthogonal to the sliding axis of the brake piston (46).

24. The disk brake as claimed in claim 23, **characterized in that** the exterior return spring (48E) is produced in one piece with said functional plate (70).

25. The disk brake (10) as claimed in claim 1, **characterized in that** the exterior brake shoe (18E) includes at least one lateral lug (26) for guiding sliding thereof that is received in an axial slide (28) of the fixed support (14).

26. The disk brake (10) as claimed in claim 25 **characterized in that** it includes a slider (32) that espouses the walls of the axial slide (28) and is fixed to the fixed support (14).

27. An exterior return spring (48E) for returning an exterior brake shoe (18E) of a disk brake (10) to an inactive position, comprising a rear connecting portion (62) to be fixed, directly or indirectly, to an associated central portion (63) of the exterior brake shoe (18E), and a front fixing portion (50) to be fixed axially to an associated central portion (58) of a fixed support (14) of the disk brake (10).

28. A replacement kit for a motor vehicle disk brake (10) according claims 1 to 25, comprising an exterior brake shoe (18E) and an exterior return spring (48E) according claim 27 being matched to said exterior brake shoe (18E).

29. The replacement kit as claimed in claim 28, **characterized in that** it further includes two springs (100) for mounting the exterior brake shoe (18E).
